# EUROPÄISCHE PATENTSCHRIFT

(11) **EP 2 005 335 B1**
(45) Veröffentlichungstag und Bekanntmachung des Hinweises auf die Patenterteilung: **15.05.2013**
(21) Anmeldenummer: 07727393.6
(22) Anmeldetag: 27.03.2007
(51) Int. Cl.: G06F 17/30

(54) **VERFAHREN UND VORRICHTUNG ZUM ARCHIVIEREN VON DRUCKBILDERN**
METHOD AND DEVICE FOR ARCHIVING PRINTED IMAGES
PROCÉDÉ ET DISPOSITIF D'ARCHIVAGE D'IMAGES IMPRIMÉES

(30) Priorität: 27.03.2006 DE 102006014043
(43) Veröffentlichungstag der Anmeldung: 24.12.2008
(73) Patentinhaber: OCÉ Printing Systems GmbH, 85586 Poing (DE)
(72) Erfinder: HAS, Michael, 85435 Erding (DE)
(74) Vertreter: Schaumburg, Thoenes, Thurn, Landskron, Eckert
(86) Internationale Anmeldenummer: PCT/EP2007/052920
(87) Internationale Veröffentlichungsnummer: WO 2007/110424

(56) Entgegenhaltungen:
- EP-A2- 0 542 462
- WO-A-02/19182
- GB-A- 2 417 707
- US-A- 5 488 458
- US-A- 6 137 967
- US-A1- 2001 011 283

## Beschreibung

Die Erfindung betrifft ein Verfahren und eine Vorrichtung zum Archivieren von Druckbildern, bei dem in einem Druckbild entsprechende Bilddaten erzeugt und archiviert werden.

Es sind verschiedene Archivierungsmöglichkeiten zum Archivieren von Druckdaten bekannt. Beispielsweise werden Druckdatenströme mit Indexierungsinformationen versehen und in einem Archiv gespeichert. Dies ist beispielsweise in der nicht vorveröffentlichten Patentanmeldung DE 10 2006 006 060 der Anmelderin sowie im Dokument US 5,940,584 beschrieben. Ferner sind Systeme zum Archivieren von gerasterten Druckdaten bekannt, die den von einem Drucker oder Kopierer ausgegebenen Druckbild entsprechen. Dabei können insbesondere mit Hilfe eines Dokumentenmanagementsystems die Druckdaten aller gedruckten, kopierten oder gefaxten Dokumente archiviert werden, wie dies beispielsweise in dem Dokument US 5,978,477 beschrieben ist.

Weiterhin sind automatische Systeme zum Überprüfen von Druckbildern eines gedruckten Dokuments bekannt, die zumindest Teile eines gedruckten Dokuments erfassen und anhand der zum Erzeugen dieser Dokumente genutzten Druckdaten überprüfen, ob der Inhalt dieser Dokumente bzw. dieser erfassten Teile korrekt erzeugt worden sind. Insbesondere werden gedruckte Barcodes sowie Texte erfasst, die mit Hilfe von Druckfarben bzw. Druckstoffen gedruckt worden sind, die magnetisierbare Partikel enthalten. Ferner können mit Hilfe einer Digitalkamera zumindest Teile eines gedruckten Druckbildes, beispielsweise Adressinformationen, erfasst werden. Die korrekte Ausgabe dieser Informationen kann mit Hilfe der zum Erzeugen des Druckbildes genutzten Druckdaten überprüft werden. Solche Systeme sind insbesondere aus den Dokumenten US 6,137,967, US 6,324,353 B1 und EP 1 085 451 A2 bekannt.

Zur Regelung von elektrografischen Parametern ist es z.B. aus der US 6,137,967 bekannt, gedruckte Bilder optoelektronisch abzutasten und auf Basis des Abtastergebnisses die Parameter nachzuregeln.

Im Zuge eines Qualitätsmanagements in Unternehmen nach dem Standard ISO 9000 ff wird die korrekte Wiedergabe von Informationen in gedruckten Dokumenten stichprobenartig überprüft. Jedoch ist dabei nicht vorgesehen, nachzuvollziehen, welche Informationen einem versandten Dokument tatsächlich entnehmbar waren oder sind.

Aufgabe der Erfindung ist es, ein Verfahren und eine Vorrichtung zum Archivieren von Druckbildern anzugeben, durch die auch nach dem Versenden eines Dokuments eine zuverlässige Aussage über den gedruckten Inhalt möglich ist.

Diese Aufgabe wird durch ein Verfahren mit den Merkmalen des Patentanspruchs 1 und durch eine Vorrichtung mit den Merkmalen des Patentanspruchs 11 gelöst. Vorteilhafte Weiterbildungen der Erfindung sind in den abhängigen Patentansprüchen angegeben.

Durch das erfindungsgemäße Verfahren und die erfindungsgemäße Vorrichtung wird erreicht, dass Bildinformationen der tatsächlich gedruckten Druckbilder archiviert werden, wodurch Abbildungen der gedruckten Dokumente durch Auswählen und Verarbeiten der archivierten Bilddaten der tatsächlich gedruckten Druckbilder ausgegeben, insbesondere angezeigt, werden können. Damit kann der in diesem Dokument sichtbare Inhalt auch zu einem späteren Zeitpunkt festgestellt, überprüft und ggf. Vergleichsdrucke hergestellt werden. Somit können beispielsweise Abbildungen der tatsächlich gedruckten Druckbilder von versandten Dokumenten angezeigt werden. Dies ist insbesondere bei Rückfragen des Empfängers beim Absender zu diesem Dokument möglich. Werden die archivierten Informationen einem Callcenter zur Verfügung gestellt, kann der Empfänger auch bei dem Callcenter anrufen, wobei dem Mitarbeiter des Callcenters dann durch Aufrufen der entsprechenden Archivdaten Abbildungen der dem Empfänger zugesandten Dokumente angezeigt werden können, wodurch der Mitarbeiter Abbildungen der tatsächlich gedruckten und versandten Dokumente zur Verfügung stehen.

Beim Archivieren werden die zu archivierenden Bilddaten vorzugsweise mit Indexierungsinformationen versehen, durch die die Bilddaten auch zu einem beliebigen späteren Zeitpunkt einfach aufgefunden werden können. Solche Indexierungsinformationen können beispielsweise Adressinformationen eines Empfängers, Datumsinformationen des Druckdatums, Versanddatums, von Barcodeinformationen oder andere geeignete Indexierungsinformationen zum Indizieren der Bilddaten sein. Die Indexierungsinformationen können zusätzlich oder alternativ auch mit Hilfe der Druckauftragsbegleitdaten, mit Hilfe der Druckdaten zum Erzeugen des Druckbildes und/oder in einem Jobticket enthaltene Informationen ermittelt werden. Zusätzlich können auch die zum Erzeugen des Druckbildes genutzten Druckdaten, d. h. ein Druckdatenstrom und/oder gerasterte Bilddaten, archiviert werden, vorzugsweise zusammen mit den erfassten Bilddaten in demselben Archiv oder alternativ in einem weiteren Archiv. Dadurch wird überprüft, ob das tatsächlich gedruckte Druckbild mit den Druckdaten zum Erzeugen des Druckbilds übereinstimmt, wodurch Fehlerursachen bei fehlenden Informationen oder Druckfehlern auf einfache Art und Weise eingegrenzt werden können. Vorzugsweise wird ein Druckbild einer Fläche oder mehrere Druckbilder mit jeweils einer Fläche erfasst, die einem Standardpapierformat eines bedruckten Einzelblatts entspricht.

Das Einzelblatt bzw. die Einzelblätter können in einer Nachverarbeitung, d. h. nach dem Bedrucken, aus einer endlosen Trägermaterialbahn zugeschnittenen werden. Das Erfassen der zu archivierenden Druckbilder kann vor oder nach dem Zuschneiden erfolgen.

Insbesondere beim Herstellen von Dokumenten durch Bedrucken von bahnförmigem Trägermaterial, vorzugsweise von bahnförmigen Papierbahnen, ermöglicht die Erfindung, sicherzustellen, dass die Druckdaten zum Erzeugen der Druckbilder dieser Dokumente dem Drucker zugeführt worden sind und dass keine Fehlermeldung beim Erzeugen des Dokuments vom Drucker ausgegeben worden ist. Ob bei der Verarbeitung der Druckdaten Fehler aufgetreten sind, insbesondere ob bei zu druckenden Briefen die korrekten Adressen in vorgesehenen Adressfeldern vorhanden sind, kann somit zu einem späteren Zeitpunkt zuverlässig nachvollzogen werden. Beispielsweise kann dann bei Rückfragen des Adressaten bei einem Ansprechpartner des Absenders oder bei vom Absender beauftragten Unternehmen, wie beispielsweise Callcentern, nachgeprüft werden, ob die Druckbilder der erzeugten Dokumente korrekt erzeugt worden sind bzw. welche Informationen tatsächlich in dem bedruckten Dokument für einen Leser sichtbar sind. Somit können Ansprechpartner in einem Unternehmen oder in einem Callcenter bei Rückfragen des Empfängers nicht nur Auskunft darüber geben, dass ein Dokument versandt worden ist, sondern darüber hinaus eine fundierte Aussage darüber treffen, ob der Inhalt des versandten Dokuments leserlich war. Insbesondere bei Papierfehlern können z.B. wichtige Informationen unleserlich sein. Ferner können durch Überschneidungen des Druckbildes mit bereits auf das Trägermaterial gedruckten Druckbildern wichtige Informationen nicht lesbar sein. Jedoch ist es wünschenswert und erreichbar, dass insbesondere bei dem Versand von Dokumenten mit einem rechtlich relevanten Inhalt auch nach dem Versenden des Dokuments eine Aussage über den lesbaren Inhalt des Dokuments getroffen werden kann. Solche Dokumente sind beispielsweise Verträge, Policen, Geschäftsbedingungen, Einladungen zu Hauptversammlungen von börsennotierten Unternehmen und andere Schriftstücke und Dokumente, bei denen es wünschenswert ist, dass nachgeprüft werden kann welche Information tatsächlich in einem versandten Dokument enthalten war.

Gemäß einem vorteilhaften Ausführungsbeispiel der Erfindung werden bei Dokumenten, die mehrere Druckseiten eines Standardpapierformats umfassen, die Bilddaten dieser Druckseiten mit den gleichen Indexinformationen archiviert, insbesondere in einem Datensatz und/oder einer Datei. Diese Bilddaten können insbesondere durch das Erfassen der bedruckten Vorderseite eines Einzelblatts und der bedruckten Rückseite eines Einzelblatts bzw. eines aus einer Papierbahn nach dem Bedrucken ausgeschnittenen Einzelblatts, erzeugt werden. Das Erfassen der gedruckten Druckbilder erfolgt vorzugsweise mit Hilfe einer Kamera, vorzugsweise einer Digitalkamera mit einem CCD-Element, wobei zum Beleuchten des gedruckten Druckbildes vorzugsweise eine Stroboskoplichtquelle genutzt wird.

Zusätzlich oder alternativ kann die Erfassungseinheit auch Lesevorrichtungen für ein- und/oder zweidimensionale Barcodes und/oder zum Erfassen von magnetisierbaren Druckstoffen, wie Magnetotonern (MICR-Toner), Magnetotinte (MICR-Tinte) oder von Infrarotlicht reflektierende Druckstoffen vorgesehen werden, um die Druckbildinformationen zu erfassen.

Magnetotoner und Magnetotinte enthalten jeweils magnetisierbare Partikel, durch die die mit diesem Toner oder dieser Tinte eingefärbten Flächen mit Hilfe geeigneter Erfassungseinheiten erfasst, insbesondere Schriftzeichen gelesen, werden können. Es können mehrere gleichartige Erfassungseinheiten, insbesondere mehrere Kameras oder mehrere Vorrichtungen zum Lesen von mit magnetisierbaren Druckstoffen gedruckten Druckbildern und/oder zum Erfassen von Barcodes, vorgesehen werden, deren Erfassungsbereiche einander überlappen oder aneinander grenzen, so dass ein entsprechend großer Gesamterfassungsbereich gebildet wird. Dadurch können insbesondere bei den bei Hochleistungsdrucksystemen oder Hochleistungskopiersystemen üblichen Druckgeschwindigkeiten alle relevanten Bereiche des bedruckten Trägermaterials erfasst werden, ohne die mögliche Druckgeschwindigkeit des Hochleistungsdrucksystems oder Hochleistungskopiersystems aufgrund des Erfassungsvorgangs reduzieren zu müssen.

Vorzugsweise ist das Druck- oder Kopiersystem ein elektrographisches, insbesondere ein elektrofotographisches, Druck- oder Kopiersystem, bei dem auch Dokumente mit aus variablen Daten erzeugten Druckobjekten, wie z.B. Briefe an verschiedene Empfänger, schnell und kostengünstig hergestellt werden können.

Vorteilhaft ist es, mehrfarbige Druckbilder mit Hilfe von Erfassungseinheiten zum Erfassen von Farbbildern zu nutzen, insbesondere analoge oder digitale Farbbildkameras. Zum Erzielen einer höheren Abtastgeschwindigkeit und/oder zum Verringern der zu archivierenden Datenmenge können jedoch auch mehrfarbige Druckbilder als Graustufenbilder oder Schwarz-Weiß-Bilder erfasst und archiviert werden.

Zusätzlich zu den genannten Archivierungsdaten werden auch Produktionsdaten des Druckprozesses erfasst und archiviert. Solche Produktionsdaten sind beispielsweise Bildverarbeitungsparameter des Controllers / des Raster Image Prozessors, elektrografische, insbesondere elektrofotografische, Einstellungen des Druck- oder Kopiersystems, wie z. B. der Wert einer Bias-Spannung, die als Übertragungshilfsspannung zum Übertragen von Tonerteilchen auf Oberflächen oder Oberflächenbereiche von Bildträgern und/oder Zwischenbildträgern dient, Feuchtigkeit, Parameter des Trägermaterials, wie Flächengewicht, Papierqualität usw., Eigenschaften des verwendeten Tonermaterials, Eigenschaften und/oder Zustand der Trägerteilchen usw. Solche Daten können dann bei einem späteren Nachdruck des Dokuments oder eines Teils des Dokuments unter Verwendung der archivierten Dokumentendaten genutzt werden, um einen möglichst originalgetreuen Nachdruck des ursprünglich erzeugten Dokuments zu ermöglichen. Gegebenenfalls können die archivierten Produktionsdaten des Druckprozesses genutzt werden, um Werte von voreinzustellenden Parametern des Druck- oder Kopiersystems vorzunehmen, mit dessen Hilfe das Dokument bzw. der Teil des Dokuments nachgedruckt werden soll. Dadurch wird ein weitgehend originalgetreuer Nachdruck erreicht.

Zum besseren Verständnis der vorliegenden Erfindung wird im Folgenden auf die in den Zeichnungen dargestellten bevorzugten Ausführungsbeispiele Bezug genommen, die anhand spezifischer Terminologie beschrieben sind. Es sei jedoch darauf hingewiesen, dass der Schutzumfang der Erfindung dadurch nicht eingeschränkt werden soll, da derartige Veränderungen und weitere Modifizierungen an den gezeigten Vorrichtungen und/oder den beschriebenen Verfahren sowie derartige weitere Anwendungen der Erfindung, wie sie darin aufgezeigt sind, als übliches derzeitiges oder künftiges Fachwissen eines zuständigen Fachmanns angesehen werden. Die Figuren zeigen Ausführungsbeispiele der Erfindung, nämlich:
- Figur 1: ein System zum Erfassen und Archivieren von auf ein Trägermaterial gedruckten Druckbildern gemäß einer ersten Ausführungsform der Erfindung;
- Figur 2: ein System zum Erfassen und Archivieren von auf ein Trägermaterial gedruckten Druckbildern gemäß einer zweiten Ausführungsform der Erfindung;
- Figur 3: ein System zum Erfassen und Archivieren von auf ein Trägermaterial gedruckten Druckbildern gemäß einer dritten Ausführungsform der Erfindung;
- Figur 4: ein System zum Erfassen und Archivieren von auf ein Trägermaterial gedruckten Druckbildern gemäß einer vierten Ausführungsform der Erfindung;
- Figur 5: ein System zum Erfassen und Archivieren von auf ein Trägermaterial gedruckten Druckbildern gemäß einer fünfen Ausführungsform der Erfindung; und
- Figur 6: ein System zum Erfassen und Archivieren von auf ein Trägermaterial gedruckten Druckbildern gemäß einer sechsten Ausführungsform der Erfindung.

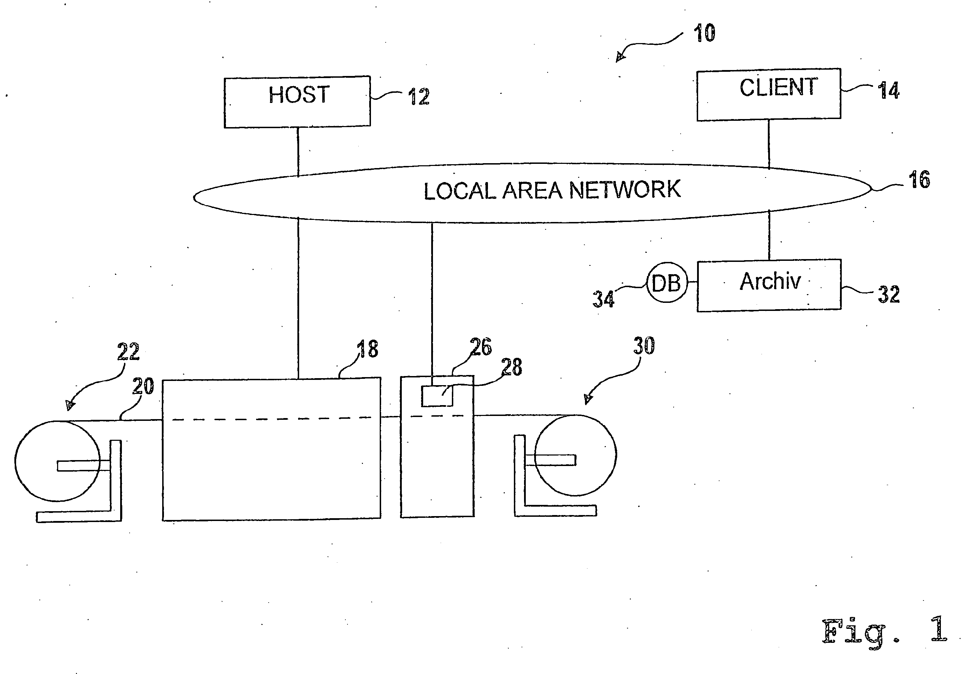

In Figur 1 ist ein System 10 zum Erfassen und Archivieren von auf ein Trägermaterial 20 gedruckten Druckbildern gemäß einer ersten Ausführungsform der Erfindung schematisch dargestellt. Über ein lokales Netzwerk (LAN) 16 sind ein Host-Computer 12, ein Client-Computer 14, ein Archivsystem 32, ein Drucker 18 und eine dem Drucker 18 nachgeordnete Erfassungseinheit 26 verbunden. Die Erfassungseinheit 26 enthält eine Digitalkamera 28 zum Erfassen der mit Hilfe des Druckers 18 auf das Trägermaterial 20 gedruckten Druckbilder. Dem Drucker 18 wird eine von einer Rolle 22 abgerollte Papierbahn 20 als Trägermaterial zum Bedrucken zugeführt, wobei der Drucker diese Papierbahn 20 auf der Vorderseite mit mindestens einem Druckbild entsprechend den vom Host-Computer 12 oder Client-Computer 14 zugeführten Druckdaten bedruckt.

Nach dem Erzeugen mindestens eines Druckbildes auf der Vorderseite der Papierbahn 20 mit Hilfe des Druckers 18 wird dieses Druckbild mit Hilfe der Digitalkamera 28 der Erfassungseinheit 26 erfasst, wobei die Papierbahn 20 nach dem Bedrucken zu einer Rolle 30 aufgewickelt wird. Das Abwickeln der Papierbahn 20 erfolgt mit Hilfe eines sogenannten Abrollers und das Aufwickeln der Papierbahn 20 mit Hilfe eines sogenannten Aufrollers.

Ferner können zum Verwalten der durch den Host-Computer 12 und den Client-Computer 14 erzeugten Druckaufträge ein Druckserver und/oder ein Dokumentenmanagementsystem sowie ein Outputmanagementsystem vorgesehen sein. Mit Hilfe eines solchen Druckservers, eines Outputmanagementsystems bzw. eines Dokumentenmanagementsystems können Druckdatenströme verarbeitet und für die Ausgabe mit Hilfe des Druckers 18 optimiert werden. Indexierungsinformationen können z.B. aus den Druckdaten, die in dem dem Drucker 18 zugeführten Druckdatenstrom und/oder die in einem Job-Ticket des Druckauftrags enthalten sind, genutzt werden. Eine solche Indexierungsmöglichkeit sowie weitere Indexierungs- und Archivierungsmöglichkeiten von Druckdaten sind ausführlich in der noch nicht veröffentlichten deutschen Patentanmeldung DE 10 2006 006 060 beschrieben.

Das Archivsystem 32 ist mit einer Datenbank 34 verbunden, in der zu archivierende Daten, vorzugsweise in Datensätzen, gespeichert sind.

Mit Hilfe der Digitalkamera 28 der Erfassungseinheit 26 wird das Druckbild oder die Druckbilder mindestens eines ausgewählten Druckauftrags oder alternativ alle mit Hilfe des Druckers 18 zum Erzeugen von Druckbildern abgearbeiteten Druckaufträge erfasst und in Bilddaten gewandelt. Die Bilddaten werden über das lokale Netzwerk 16 zum Archivsystem 32 übertragen und vom Archivsystem 32 in der Datenbank 34 gespeichert. Vorzugsweise werden diese Bilddaten mit Indexierungsinformationen versehen, wie dem Druckdatum, dem Versanddatum, einer Druckauftragsnummer oder einer Adressinformation eines Empfängers, an den ein aus der bedruckten Papierbahn 20 erzeugtes Dokument gesandt wird. Somit sind die archivierten Bilddaten der mit Hilfe der Kamera 28 erfassten gedruckten Druckbilder indexiert, d. h. mit Indexierungsinformationen versehen, sodass sie zu einem späteren Zeitpunkt einfach mit Hilfe dieser oder einer dieser Indexierungsinformationen durch das Archivsystem 32 in der Datenbank 34 aufgefunden werden können. Durch dieses einfache Auffinden der Bilddaten können der Client-Computer 14, der Host-Computer 12 oder ein weiterer mit dem Netzwerk 16 oder über ein weiteres nicht dargestelltes Netzwerk verbundener Computer oder eine mit dem Netzwerk verbundene Datenverarbeitungsanlage die archivierten Bilddaten gezielt aus der Datenbank 34 auslesen. Damit kann auch nach dem Versenden eines Dokuments sicher festgestellt werden, wie das Druckbild eines gedruckten Dokuments tatsächlich ausgesehen hat, nachdem es den Drucker 18 verlassen hat.

Insbesondere bei telefonischen Rückfragen des Empfängers des gedruckten Dokuments kann bei Bezugnahme auf ein an ihn gesandtes Dokument ein Suchvorgang mit Hilfe des Archivsystems 32 nach den Bilddaten dieses Dokuments ausgeführt werden. Die bei dieser Suche ermittelten Bilddaten des betreffenden Dokuments können aus der Datenbank 34 ausgelesen und beispielsweise zu dem Client-Computer 14 übertragen werden, der von einem Mitarbeiter bedient wird, der die Rückfrage des Empfängers entgegennimmt. Ferner ist es durch die Erfindung möglich, auch bei Rückfragen von Empfängern, die über ein Callcenter abgewickelt werden, dem Callcenter Zugriff auf das Archivsystem 32 und somit auf die in der Datenbank gespeicherten Daten zu gewähren, wodurch einem Mitarbeiter des Callcenters dann Bilder der an einen Empfänger gesandten Dokumente angezeigt werden können, wodurch der Callcenter Mitarbeiter bzw. der Bearbeiter einfach überprüfen kann, welche Informationen dem Empfänger tatsächlich zugegangen sind.

Durch das Archivieren der erfassten Bilddaten der gedruckten Druckbilder kann auch zu einem späteren Zeitpunkt die Qualität der gedruckten Elemente überprüft werden, wenn beispielsweise Reklamationen auftreten, die bereits ausgelieferte und/oder versandte Druckerzeugnisse bzw. Dokumente betreffen. Mit Hilfe des Systems 10 kann somit auf einfache Art und Weise eine Aussage über die Qualität und/oder den Informationsgehalt von gedruckten Dokumenten getroffen werden.

Alternativ oder zusätzlich zu der Digitalkamera 28 kann die Erfassungseinheit 26 auch Laserabtastscanner, insbesondere Barcodescanner, oder Lesegeräte zum Lesen von mit magnetisierbaren Partikeln enthaltenen Druckfarben umfassen, die ein mit diesen Druckfarben gedrucktes Druckbild erfassen und in Bilddaten umwandeln. Ferner ist aus dem Dokument US 6,137,967 bekannt, mit Hilfe mindestens einer Erfassungseinheit gedruckte Elemente zu erfassen und zu überprüfen, ob die erfassten Elemente mit den jeweiligen durch die Druckdaten spezifizierten Elementen übereinstimmen. Damit sollen insbesondere Lese-, Eingabe- und Verarbeitungsfehler beim Erzeugen von gedruckten Dokumenten ermittelt werden. Solche Anordnungen sind auch aus den Dokumenten US 5,978,477, US 5,940,584 und US 6,324,353 bekannt.

Vorzugsweise werden die Druckbilder zum Erfassen mit Hilfe einer geeigneten Lichtquelle beleuchtet. Eine solche Lichtquelle ist insbesondere eine Stroboskop- und/oder Blitzlichtbeleuchtungseinrichtung. Ferner ist es bei hohen Druckgeschwindigkeiten vorteilhaft mehrere Erfassungseinheiten 26 oder mehrere Digitalkameras 28 so nacheinander anzuordnen, dass deren Erfassungsbereiche in Transportrichtung der Papierbahn 20 einen gegenüber dem Erfassungsbereich einer Einzelkamera 28 vergrößerten Gesamterfassungsbereich haben. Vorzugsweise grenzen die Ränder benachbarter Erfassungsbereiche aneinander oder überlappen sich geringfügig.

Zusätzlich kann die Erfassungseinheit 26 sowie die Digitalkamera 28 zur Überwachung des gedruckten Druckbildes genutzt werden, wie dies in dem Dokument US 6,137,967, beschrieben ist. Mit Hilfe des Systems 10 kann somit sicher nachvollzogen werden, was auf einem bedruckten Trägermaterial 20, das den Drucker 18 verlassen hat, tatsächlich abgebildet war. Durch eine Kodierung der erfassten Bilddaten, insbesondere durch ein Indexierung und Archivieren können die Bilder der gedruckten Druckbilder zu einem späteren Zeitpunkt einfach gesucht und angezeigt bzw. ausgegeben werden, wodurch sich auch zu einem späteren Zeitpunkt der Inhalt dieser Dokumente exakt feststellen lässt. Die Erfassungseinheit kann auch eine MICR-Leseeinheit enthalten, um mit Hilfe von MICR-Toner oder MICR-Tinte gedruckte Druckbilder zu erfassen. Dies ist auch nach dem Kuvertieren eines gedruckten Dokuments in einen Umschlag durch den Umschlag hindurch möglich. Auch dann ist das Ausgeben dieser erfassten Bildinformationen zu einem späteren Zeitpunkt einfach möglich.

Durch die Erfindung werden zumindest Teile der gedruckten Druckbilder nach dem Umdrucken dieser Druckbilder auf ein Trägermaterial 20 erfasst und in Bilddaten umgewandelt, die dann gespeichert, d. h. archiviert, werden. Vorzugsweise werden sie kombiniert mit Informationen archiviert, die in dem einem Controller des Druckers 18 zugeführten Druckdatenstrom bzw. in dem Druckauftrag enthalten sind. Somit werden Druckdaten und Bilddaten mit Hilfe dieser Druckdaten erzeugter Druckbilder gemeinsam gespeichert d. h. gemeinsam archiviert. Durch dieses gemeinsame Archivieren ist auch eine Indexierung der erfassten Bilddaten möglich. Durch eine solche Indexierung und durch eine Indexierung mit Hilfe weiterer Indexinformationen ist das spätere Auffinden bzw. der spätere Aufruf dieser Bilddaten zur Ausgabe mit Hilfe einer Anzeigeeinheit des Druckers 18 oder eines weiteren Druckers einfach möglich. Auch können die archivierten Bildinformationen einfach über das Datennetz 16 oder ein weiteres Datennetz, insbesondere ein globales Netzwerk, wie das www (Internet), übertragen werden. Eine solche Übertragung ist insbesondere mit Hilfe einer E-Mail möglich. Der Controller des Druckers 18 ist insbesondere zur Interpretation (sog. parsing) des Druckdatenstroms einer klassischen Druckdatensprache wie z.B. PostScript, Printer Control Language (PCL), Advanced Funktion Presentation (AFP) oder der erweiterten Fassung MO:DCA, Intelligent Printer Data Stream (IPDS), Portable Document Format (PDF) oder dergleichen in der Lage. Weiterhin erzeugt er aus dem Druckdatenstrom insbesondere gerasterte Daten. Zusätzlich kann er ggf. Job Ticket Daten interpretieren und entsprechende Steuerkommandos an das Druckgerät oder an weitere Geräte zur Verarbeitung der gedruckten Dokumente wie z.B. Aufroller, Schneidegeräte, Bindegeräte (sog. finishing Geräte) umfassen. Es können somit aus den Daten, die der Controller verarbeitet bzw. erzeugt, Indexdaten gebildet bzw. extrahiert werden als auch diese Daten mit Daten, die von der Kamera beim Abtasten der entsprechenden, gedruckten Dokumente gebildet werden, einschließlich daraus z.B. per optischer Zeichenerkennung (OCR) gebildeten Indexdaten, zum Archivieren kombiniert werden, bzw. aufeinander referenziert werden.

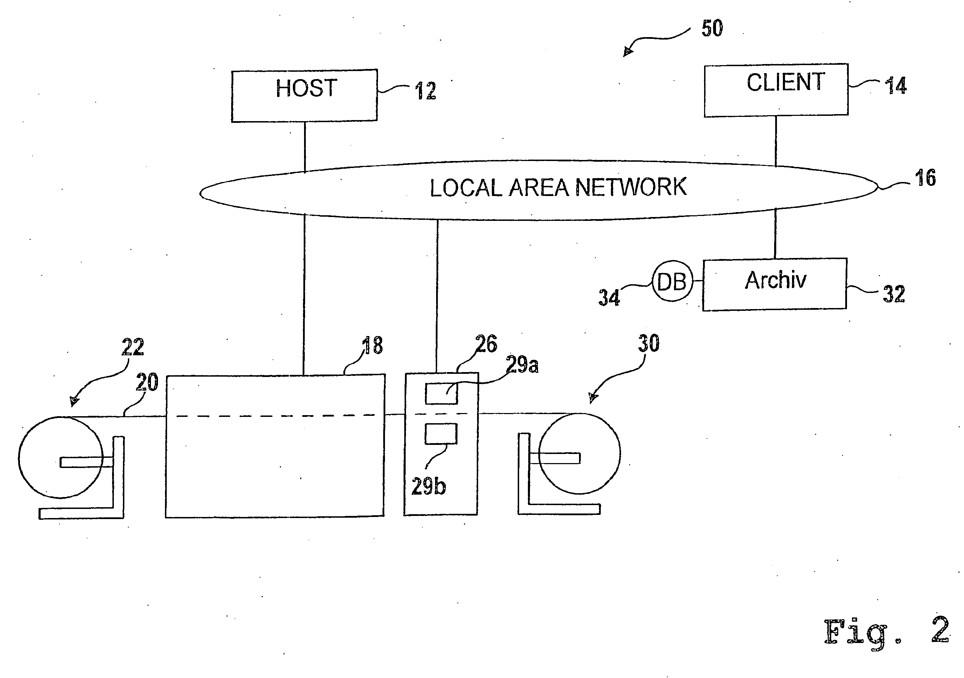

In Figur 2 ist ein System 50 zum Erfassen und Archivieren von auf ein Trägermaterial 20 gedruckten Druckbildern gemäß einer zweiten Ausführungsform der Erfindung schematisch gezeigt. Das System 50 hat einen ähnlichen Aufbau wie das in Figur 1 gezeigte System 10. Elemente mit demselben Aufbau oder derselben Funktion haben dieselben Bezugszeichen.

Bei dem System 50 nach Figur 2 kann die Papierbahn 20 mit Hilfe des Druckers 18 sowohl auf der Vorderseite als auch auf der Rückseite bedruckt werden, wodurch der Erfassungseinheit 26 ein doppelseitig bedrucktes Trägermaterial 20 zum Erfassen zugeführt wird. Die Erfassungseinheit 26 enthält eine erste Digitalkamera 29a und eine zweite Digitalkamera 29b, wobei die Digitalkamera 29a die auf der Vorderseite des Trägermaterials 20 gedruckten Druckbilder und die Digitalkamera 29b die auf der Rückseite des Trägermaterials 20 gedruckten Druckbilder erfasst. Die erfassten Druckbilder werden mit Hilfe der Erfassungseinheit 26 bzw. mit Hilfe der Digitalkameras 29a, 29b in Bilddaten gewandelt, die dem Archivsystem 32 zur Archivierung zugeführt werden, wie dies im Zusammenhang mit Figur 1 für die mit Hilfe der Kamera 28 erfassten Bilddaten beschrieben worden ist. Vorzugsweise werden die auf der Vorderseite und die gleichzeitig auf der Rückseite eines Flächenabschnitts des Trägermaterials 20 mit Hilfe der Kameras 29a, 29b erfassten Druckbilder einander zugeordnet in der Datenbank 34, vorzugsweise in einem Datensatz oder einem Dokument, gespeichert.

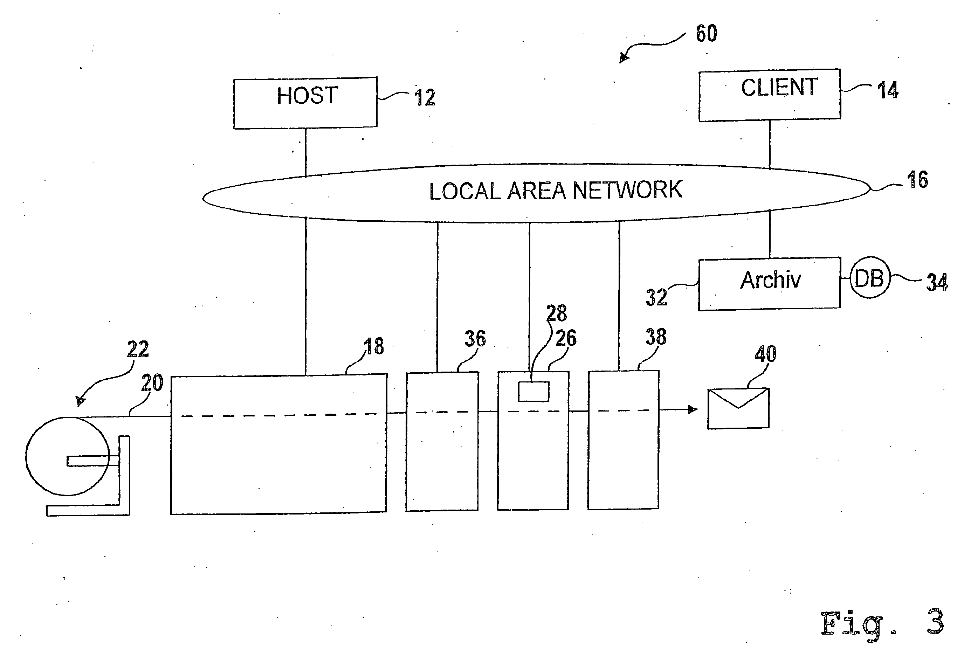

In Figur 3 ist ein System 60 zum Erfassen von auf ein Trägermaterial gedruckten Druckbildern gemäß einer dritten Ausführungsform der Erfindung ähnlich dem System 10 nach Figur 1 gezeigt. Im Unterschied zu dem System 10 nach Figur 1 hat das System 60 nach Figur 3 eine Nachverarbeitungseinheit 36 zum Schneiden der Papierbahn 20 in Einzelblätter, wobei mit Hilfe der Digitalkamera 28 der Erfassungseinheit 26 die erzeugten Druckbilder bzw. das mit Hilfe des Druckers 18 erzeugte Druckbild einzelblattweise erfasst und, wie im Zusammenhang mit den Figuren 1 und 2 beschrieben, archiviert wird. Ferner ist eine zweite Nachverarbeitungseinheit 38 zum Falten und Kuvertieren der geschnittenen Einzelblätter vorgesehen, wobei die gedruckten und mit Hilfe der Erfassungseinheit 26 erfassten Dokumente als Brief 40 an einen Empfänger versandt werden. Vorzugsweise wird zum Indexieren der erfassten Bilddaten eine Adressinformation des Empfängers genutzt, an den der Brief 40 adressiert ist. Der Drucker 18 kann, wie im Zusammenhang mit Figur 2 beschreiben, die Papierbahn 20 auch auf der Vorder- und auf der Rückseite mit einem Druckbild versehen. Dann ist es, wie im Zusammenhang mit Figur 2 beschrieben, vorteilhaft, zwei Erfassungsvorrichtungen 29a, 29b, insbesondere zwei Digitalkameras, vorzusehen, wobei jeweils eine dieser Kameras die Vorderseite und die andere Kamera die Rückseite der Einzelblätter erfasst. Alternativ kann ein Einzelblatt 43 nach dem Erfassen der Vorderseite gewendet und der Erfassungseinheit 26 nochmals zugeführt werden wodurch nur eine Erfassungsvorrichtung, insbesondere nur eine Digitalkamera vorgesehen werden muss. Dies ist bei allen Ausführungsformen der Erfindung möglich.

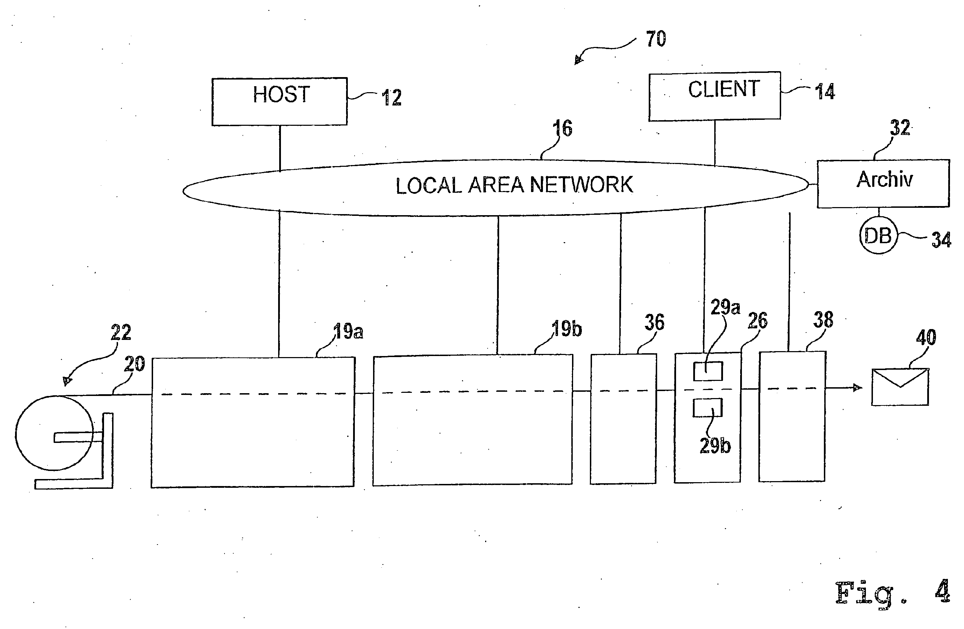

In Figur 4 ist ein System 70 zum Erfassen und Archivieren von auf ein Trägermaterial 20 gedruckten Druckbildern gemäß einer vierten Ausführungsform der Erfindung dargestellt. Bei dem System 70 ist ein erster Drucker 19a zum Bedrucken der Vorderseite der Papierbahn 20 und ein zweiter Drucker 19b zum Bedrucken der Rückseite der Papierbahn 20 vorgesehen. Zwischen den Druckern 19a, 19b ist eine nicht dargestellte Wendevorrichtung zum Wenden der Papierbahn 20 vorgesehen, wodurch die Drucker 19a, 19b den gleichen Aufbau haben können. Die Drucker 19a, 19b werden als sogenanntes Tandemdrucksystem betrieben, wobei die Drucker 19a, 19b auf geeignete Art und Weise miteinander gekoppelt sind. Insbesondere werden Teile der Steuervorgänge des Druckers 19b vom Drucker 19a gesteuert. Die Nachverarbeitungseinheit 36 dient, wie im Zusammenhang mit Figur 3 beschrieben, zum Trennen bzw. Schneiden der Papierbahn 20 in Einzelblätter, wobei die Vorderseite dieser Einzelblätter mit Hilfe der Digitalkamera 29b und die Rückseite dieser Einzelblätter mit Hilfe der Kamera 29a der Erfassungseinheit 26 erfasst werden. Nachfolgend werden die Einzelblätter mit Hilfe der Nachverarbeitungseinheit 38 kuvertiert und zum Versand als Briefsendung 40 bereitgestellt.

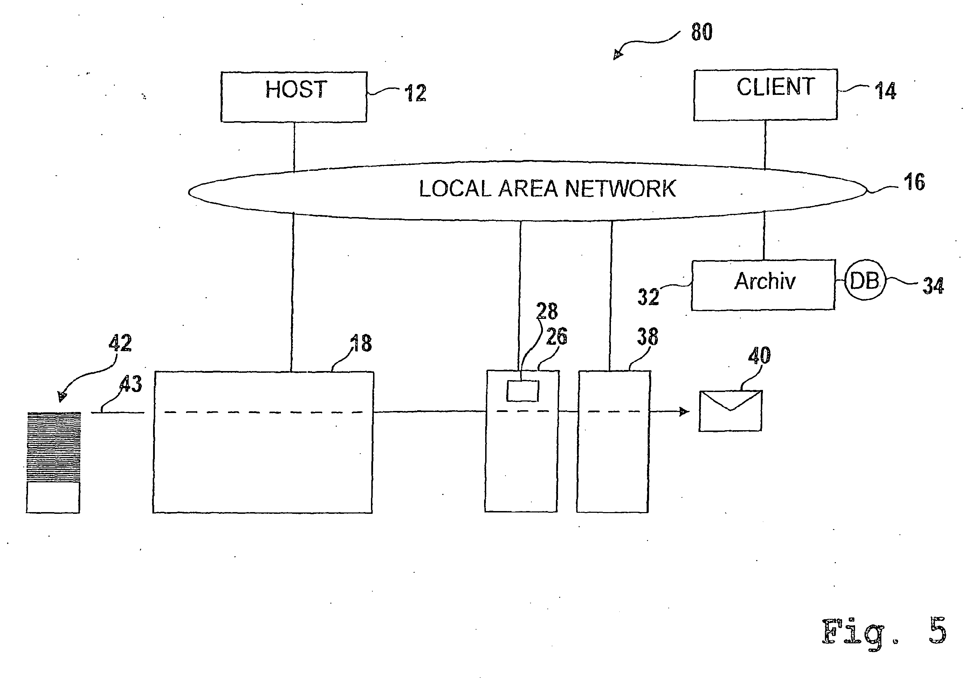

In Figur 5 ist ein System 80 zum Erfassen und Archivieren von einem auf ein Einzelblatt 43 gedruckten Druckbild gemäß einer fünften Ausführungsform der Erfindung dargestellt. Dem Drucker 18 werden Einzelblätter nacheinander von einem Blattstapel 42 zugeführt. Beim Einzug der Einzelblätter 43 werden unmittelbar aufeinander folgende Einzelblätter 43 mit einem geeigneten Abstand zueinander transportiert. Mit Hilfe der Kamera 28 der Erfassungseinheit 26 werden Bildaufnahmen der auf den Einzelblättern 43 erzeugten Druckbildern und des Einzelblatts 43 aufgenommen. Die Einzelblätter 43 werden mit Hilfe der Nachverarbeitungseinheit 38 gefaltet und kuvertiert und als versandfertige Briefsendung 40 ausgegeben.

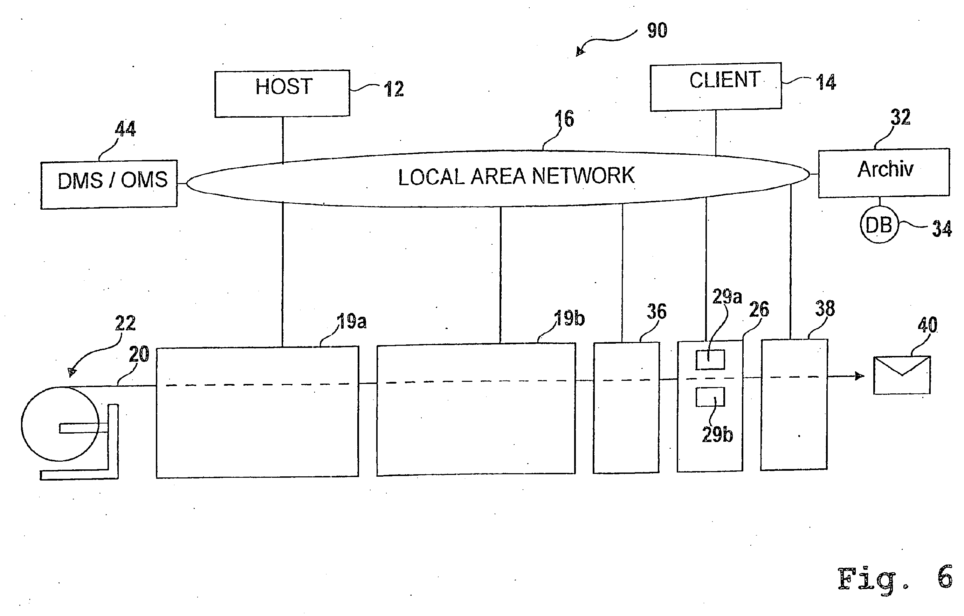

In Figur 6 ist ein System 90 zum Erfassen und Archivieren von auf ein Trägermaterial 20 gedruckten Druckbildern gemäß einer sechsten Ausführungsform der Erfindung gezeigt. Bei dem System 90 ist ein Dokumentenmanagement und Outputmanagementsystem 44 mit dem lokalen Netzwerk 16 verbunden, das die vom Host-Computer 12 oder Client-Computer 14 zugeführten Druckaufträge entgegennimmt und den Druckern 19a, 19b entsprechende Druckdatenströme zuführt. Ferner kann das Dokumentenmanagementsystem 44 dazu benutzt werden, die mit Hilfe der Erfassungseinheit 26 erfassten Bilddaten dem Archivsystem 32 zum Archivieren zuzuführen. Das Dokumentenmanagementsystem 44 kann dabei den zu archivierenden Bilddaten auch Indexierungsinformationen hinzufügen. Zusätzlich oder alternativ kann wie bereits im Zusammenhang mit den Figuren 1 bis 5 beschrieben, das Archivsystem 32 zusätzlich oder alternativ den zu archivierenden Bilddaten Indexierungsinformationen hinzufügen.

Zusätzlich oder Alternativ können die Drucker 19a, 19b jeweils die Vorder- und die Rückseite der Papierbahn 20 mit jeweils einem Druckbild bedruckt werden. Vorzugsweise bedruckt der Drucker 19a die Vorderseite und die Rückseite der Papierbahn 20 mit jeweils einem Druckbild einer ersten Druckfarbe und der Drucker 19b jeweils die Vorderseite und die Rückseite der der Papierbahn 20 mit einem Druckbild einer von der Druckfarbe des ersten Druckers 19a verschiedenen zweiten Druckfarbe. Dadurch können zwei Farbauszüge mit Hilfe der Drucker 19a, 19b auf einer Fläche der Papierbahn 20 übereinander gedruckt werden, sodass mit Hilfe eines solchen Tandem-Drucksystems ein zweifarbiges Druckbild sowohl auf der Vorder- als auch auf der Rückseite erzeugt werden kann. Alternativ kann der Drucker 19a die Vorderseite der Papierbahn 20 mit einem Druckbild einer ersten Druckfarbe und der Drucker 19b mit einem Druckbild einer von der ersten Farbe verschiedenen zweiten Farbe bedrucken, wodurch die Papierbahn 20 einseitig mit einem zweifarbigen Druckbild bedruckt wird.

Die Kameras 28, 29a, 29b der verschiedenen Ausführungsformen können die Druckbilder als Farbbilder, als Graustufenbilder oder als Schwarzweißbilder erfassen. Insbesondere können die Kameras 28, 29a, 29b auch mehrfarbige Druckbilder als Graustufenbilder oder Schwarzweißbilder erfassen, wodurch der zum Archivieren benötigte Speicherbedarf reduziert werden kann und wodurch die Erfassung mit Hilfe der Kameras 28, 29a, 29b insbesondere mit Hilfe von CCD-Elementen schneller erfolgen kann. Dies ist insbesondere bei Hochleistungsdrucksystemen und Hochleistungskopiersystemen vorteilhaft.

Das im Zusammenhang mit Figur 6 erläuterte Dokumentenmanagementsystem und/oder das Outputmanagementsystem 44 kann in gleicher Weise auch bei den anderen Ausführungsformen, die im Zusammenhang mit den Figuren 1 bis 5 erläutert worden sind, eingesetzt werden. Das erfindungsgemäße Erfassen der gedruckten Druckbilder kann insbesondere unabhängig von dem verwendeten Druckprinzip, von der Anzahl der verwendeten Druckfarben und von dem bedruckten Trägermaterial angewendet werden. Es ist jedoch vorteilhaft, mit Hilfe der Erfassungseinheit 26 Abbildungen von bedrucktem Trägermaterial zu erfassen und zu archivieren, das mit Hilfe eines elektrografischen, insbesondere eines elektrofotografischen, Druck- oder Kopiersystems bedruckt worden ist.

Es können weitere Vor- und/oder Nachverarbeitungseinrichtungen vorgesehen sein, insbesondere zum Falzen, Binden, Oberflächenveredeln und anderen bekannten Vor- und Nachverarbeitungsprozessen. Auch können auf dem zu bedruckenden Trägermaterial, insbesondere auf der Papierbahn 20 oder dem Einzelblatt 43 bereits Druckbilder vor dem Bedrucken mit Hilfe der Drucker 18, 19a, 19b vorgesehen sein, insbesondere ein Logo oder ein Briefkopf. Auch können mehrere Papiervorräte, insbesondere mehrere Blattstapel 42 vorgesehen werden, von denen dann dem Druckauftrag entsprechende bzw. für den Druckauftrag geeignete Einzelblätter 43 eingezogen werden.

Zusätzlich zu den genannten Archivierungsdaten werden auch Produktionsdaten des Druckprozesses erfasst und archiviert. Solche Produktionsdaten sind beispielsweise Bildverarbeitungsparameter des Controllers / des Raster Image Prozessors, grafische, insbesondere elektrografische, insbesondere elektrofotografische, Einstellungen des Druck- oder Kopiersystems, wie z. B. der Wert einer Bias-Spannung, die als Übertragungshilfsspannung zum Übertragen von Tonerteilchen auf Oberflächen oder Oberflächenbereiche von Bildträgern und/oder Zwischenbildträgern dient, Feuchtigkeit, Parameter des Trägermaterials, wie Flächengewicht, Papierqualität usw., Eigenschaften des verwendeten Tonermaterials, Eigenschaften und/oder Zustand der Trägerteilchen usw. Solche Daten können dann bei einem späteren Nachdruck des Dokuments oder eines Teils des Dokuments unter Verwendung der archivierten Dokumentendaten genutzt werden, um einen möglichst originalgetreuen Nachdruck des ursprünglich erzeugten Dokuments zu ermöglichen. Gegebenenfalls können die archivierten Produktionsdaten des Druckprozesses genutzt werden, um Werte von voreinzustellenden Parametern des Druck- oder Kopiersystems vorzunehmen, mit dessen Hilfe das Dokument bzw. der Teil des Dokuments nachgedruckt werden soll. Dadurch wird ein weitgehend originalgetreuer Nachdruck erreicht.

Obgleich in den Zeichnungen und in der vorhergehenden Beschreibung bevorzugte Ausführungsbeispiele aufgezeigt und detailliert beschrieben worden sind, sollte dies als rein beispielhaft und die Erfindung nicht einschränkten angesehen werden. Es sei darauf hingewiesen, das nur die bevorzugten Ausführungsbeispiele dargestellt und beschreiben sind und sämtliche Veränderungen und Modifizierungen, die im Schutzumfang der Erfindung liegen, geschützt werden sollen.

### Bezugszeichenliste

| | |
|---|---|
| 10, 50, 60 70, 80, 90 | System |
| 12 | Host-Computer |
| 14 | Client-Computer |
| 16 | lokales Netzwerk |
| 18, 19a, 19b | Drucker |
| 20 | Papierbahn |
| 22, 30 | Rolle |
| 26 | Erfassungseinheit |
| 28, 29a, 29b | Digitalkamera |
| 32 | Archivsystem |
| 34 | Datenbank |
| 36 | Schneideinrichtung |
| 38 | Kuvertiereinrichtung |
| 40 | versandfertiges Druckerzeugnis |
| 42 | Blattstapel |
| 43 | Einzelblatt |

## Patentansprüche

1. Verfahren zum Archivieren von Druckbildern,
bei dem mit Hilfe einer Erfassungseinheit (26) mindestens ein mit Hilfe eines Druck- oder Kopierersystems (18, 19a, 19b) erzeugtes Druckbild erfasst wird,
dem erfassten Druckbild entsprechende Bilddaten erzeugt werden,
die Bilddaten in einem Archiv (32) archiviert werden,
mindestens ein Teil der zum Erzeugen des Druckbildes genutzten Druckdaten zusammen mit den Bilddaten im Archiv (32) gespeichert werden,
zusätzlich zu den Bilddaten und den Druckdaten Produktionsdaten des Druckprozesses erfasst und archiviert werden, um einen möglichst originalgetreuen Nachdruck des dem Druckbild zugrundeliegenden Dokuments zu ermöglichen,
im Archiv archivierte Bilddaten mit Hilfe mindestens einer Indexierungsinformation aus dem Archiv (32) ausgelesen und ausgegeben werden, und
bei dem mit Hilfe der im Archiv (32) gespeicherten Druckdaten und der im Archiv (32) gespeicherten Bilddaten überprüft wird, ob das tatsächlich gedruckte Druckbild mit den Druckdaten zum Erzeugen des Druckbildes übereinstimmt.

2. Verfahren nach einem der vorhergehenden Ansprüche,
**dadurch gekennzeichnet, dass** Informationen über Produktionsparameter zum Herstellen des Druckbildes, zum Vor-und/oder Nachverarbeiten eines zu bedruckenden und/oder bedruckten Trägermaterials, Bildverarbeitungsparameter eines Raster Image Prozessors, voreingestellte elektrografische Parameter des Druck- oder Kopiersystems (18, 19a, 19b) und/oder weitere Parameter zum Erzeugen und/oder Verarbeiten des zu bedruckenden und/oder bedruckten Trägermaterials vorzugsweise zusammen mit den erfassten Bilddaten im Archiv (32) gespeichert werden.

3. Verfahren nach einem der vorhergehenden Ansprüche,
**dadurch gekennzeichnet, dass** das mit Hilfe der Erfassungseinheit (26) erfasste Druckbild mindestens einen Bereich einer Druckseite, eine Druckseite, Bereiche mehrerer Druckseiten umfasst, wobei die Druckseite vorzugsweise die Abmessung eines Standardpapierformats hat.

4. Verfahren nach einem der vorhergehenden Ansprüche,
**dadurch gekennzeichnet, dass** ein Trägermaterial, (20, 43) auf dem das Druckbild mit Hilfe des Druck- oder Kopiersystems (18, 19a, 19b) erzeugt wird, mit Hilfe mindestens einer Nachverarbeitungseinheit (36, 38) weiterverarbeitet wird, und
dass die Erfassungseinheit (26) das Druckbild nach dem Weiterverarbeiten des Trägermaterials (20, 43) mit Hilfe der mindestens einer Nachverarbeitungseinheit (36, 38) erfasst, wobei das Trägermaterial (20, 43) vorzugsweise ein bahnförmiges Trägermaterial (20), insbesondere eine Papierbahn (20) ist.

5. Verfahren nach einem der vorhergehenden Ansprüche,
**dadurch gekennzeichnet, dass** das Verfahren in einen Produktionsablauf zum Erzeugen von Druckerzeugnissen (40) eingebettet wird, wobei
eine Produktionslinie zum Durchführen des Produktionsablaufs vorgesehen ist, die zusätzlich zu dem Druck- oder Kopiersystems (18, 19a, 19b) zum Erzeugen des Druckbildes auf einem Trägermaterial (20, 43) einen Abroller, Vorverarbeitungsmittel, Nachverarbeitungsmittel, wie Aufroller, Stapler, Falteinheiten und/oder Schneideinheiten umfasst.

6. Verfahren nach einem der vorhergehenden Ansprüche,
**dadurch gekennzeichnet, dass** die Erfassungseinheit (26) eine optische Erfassungseinheit ist und vorzugsweise mindestens eine Kamera (28) oder eine Abtasteinrichtung mit einem CCD aufweist.

7. Verfahren nach einem der vorhergehenden Ansprüche,
**dadurch gekennzeichnet, dass** die Erfassungseinheit (26) eine Beleuchtungsanordnung zum Beleuchten des zu erfassenden Druckbildes, vorzugsweise eine Stroboskoplichtquelle, umfasst.

8. Verfahren nach einem der vorhergehenden Ansprüche,
**dadurch gekennzeichnet, dass** mindestens zwei Erfassungseinheiten (26) vorgesehen werden, deren Erfassungsbereiche in Transportrichtung des Trägermaterials (20, 43) hintereinander angeordnet sind, sodass die Teile des in den Erfassungsbereichen der Erfassungseinheiten angeordneten Druckbildes oder der in den Erfassungsbereichen der Erfassungseinheiten angeordneten Druckbildern gleichzeitig erfasst werden können, wobei benachbarte Erfassungsbereiche vorzugsweise aneinandergrenzen.

9. Verfahren nach einem der vorhergehenden Ansprüche,
**dadurch gekennzeichnet, dass** mit Hilfe des Druck- oder Kopiersystems (18, 19a, 19b) ein aus mindestens zwei Grundfarben zusammengesetztes Druckbild erzeugt wird, wobei mit Hilfe der Erfassungseinheit das Druckbild vorzugsweise als Graustufenbild oder Schwarzweißbild erfasst wird.

10. Verfahren nach einem der vorhergehenden Ansprüche,
**dadurch gekennzeichnet, dass** zumindest ein Teil des Trägermaterials (20, 43) beidseitig bedruckt wird, wobei die auf der Vorderseite und auf der Rückseite des Trägermaterials (20, 43) erzeugten Druckbilder mit Hilfe der Erfassungseinheit (26) erfasst werden.

11. Vorrichtung zum Archivieren von Druckbildern,
mit einer Erfassungseinheit (26) zum Erfassen eines Druckbildes und zum Erzeugen von dem erfassten Druckbild entsprechenden Bilddaten, und
mit einem Archiv (32) zum Speichern mindestens eines Teils der zum Erzeugen des Druckbildes genutzten Druckdaten zusammen mit den Bilddaten, und
mit Mitteln zum Speichern der Druckdaten zusammen mit den Bilddaten im Archiv,
mit Mitteln zum Erfassen und Archivieren von Produktdaten des Druckprozesses zusätzlich zu den Bilddaten und Druckdaten, um einen möglichst originalgetreuen Nachdruck des dem Druckbild zugrundeliegenden Dokuments zu ermöglichen,
mit Mitteln, die mit Hilfe mindestens einer Indexierungsinformation im Archiv (32) archivierte Bilddaten auslesen und ausgeben, und
mit Mitteln, die mit Hilfe der im Archiv (32) gespeicherten Druckdaten und der im Archiv gespeicherten Bilddaten überprüfen, ob das tatsächlich gedruckte Druckbild mit den Druckdaten zum Erzeugen des Druckbildes übereinstimmt.

12. Vorrichtung nach Anspruch 11, **dadurch gekennzeichnet, dass** das Druckbild mit Hilfe eines Drucksystems oder Kopiersystems (18, 19a, 20a) erzeugt wird, das vorzugsweise in einer Produktionslinie zum Erzeugen von Druckerzeugnissen (40) eingebettet ist.

## Claims

1. Method to archive printed images,
in which at least one print image generated with the aid of a printing or copying system (18, 19a, 19b) is recorded with the aid of a recording unit (26),
image data corresponding to the recorded print image are generated,
the image data are archived in an archive (32),
and in which at least one part of the print data used for generating the print image is stored in the archive (32) together with the image data,
in addition to the image data and the print data production data of the printing process are recorded and archived in order to enable a reproduction of the document that is based on the print image as realistic as possible,
image data archived in the archive are read out and output from the archive (32) with the aid of at least one indexing information, and
wherein with the aid of the print data stored in the archive (32) and the image data stored in the archive (32) it is checked whether the really printed print image corresponds with the print data for generating the print image.

2. Method according to one of the preceding claims, **characterized in that** information on production parameters for generating the print image, for pre-processing and/or post-processing of a to-be-printed and/or printed medium material, image processing parameters of a raster image processor, preset electrographic parameters of the printing or copying system (18, 19a, 19b) and/or further parameters for generating and/or processing of the to-be-printed and/or printed medium material are advantageously stored in the archive (32) together with the recorded image data.

3. Method according to one of the preceding claims, **characterized in that** the print image recorded with the aid of the recording unit (26) comprises at least one region of a print page, a print page, regions of multiple print pages, wherein the print page advantageously has the dimensions of a standard paper format.

4. Method according to one of the preceding claims, **characterized in that** a medium material (20, 43) on which the print image is generated with the aid of the printing or copying system (18, 19a, 19b) is processed further with the aid of at least one post-processing unit (36, 38), and
**in that** the recording unit (26) records the print image after further processing of the medium material (20, 43) with the aid of the at least one post-processing unit (36, 38), wherein the medium material (20, 43) is advantageously a web-shaped medium material (20), in particular a paper web (20).

5. Method according to one of the preceding claims, **characterized in that** the method is embedded into a production workflow for generation of print products (40), wherein
a production line for implementation of the production workflow is provided comprising in addition to the printing or copying system (18, 19a, 19b) for generating the print image on a medium material (20, 43) an unwinder, pre-processing means, post-processing means such as a winder, stacker, folding units and/or cutting units.

6. Method according to one of the preceding claims, **characterized in that** the recording unit (26) is an optical recording unit and advantageously comprises at least one camera (28) or a scanner with a CCD.

7. Method according to one of the preceding claims, **characterized in that** the recording unit (26) comprises an illumination arrangement to illuminate the print image to be recorded, advantageously a stroboscopic light source.

8. Method according to one of the preceding claims, **characterized in that** at least two recording units (26) are provided whose acquisition regions are arranged one after another in the transport direction of the medium material (20, 43), such that the portions of the print image arranged in the acquisition regions of the recording units can be simultaneously recorded, wherein adjacent acquisition regions advantageously border one another.

9. Method according to one of the preceding claims, **characterized in that** a print image composed of at least two primary colors is generated with the aid of the printing or copying system (18, 19a, 19b), wherein the print image is advantageously recorded as a greyscale image or black-and-white image with the aid of the recording unit.

10. Method according to one of the preceding claims, **characterized in that** at least a portion of the medium material (20, 43) is printed on both sides, wherein the print images generated on the front side and on the back side of the medium material (20, 43) are recorded with the aid of the recording unit (26).

11. Device to archive print images, comprising:
a recording unit (26) for recording a print image and for generating image data corresponding with the recorded print image, and
an archive (32) for storing at least one part of the print data used for generating the print image together with the recorded image, and
means for storing the print data in the archive together with the image data,
means for recording and archiving product data of the print process in addition to the image data and print data in order to enable a reproduction of the document that is based on the print image as realistic as possible,
means for reading out and outputting image data archived in the archive (32) with the aid of at least one indexing information, and
means for checking with the aid of print data stored in the archive (32) and the image data stored in the archive whether the actually printed print image corresponds with the print data for generating the print image.

12. Device according to claim 11, **characterized in that** the print image is generated with the aid of a printing system or copying system (18, 19a, 20a) that is advantageously embedded into a production workflow for generation of print products (40).

## Revendications

1. Procédé d'archivage d'images imprimées,
selon lequel
une image imprimée produite à l'aide d'un système d'impression ou de copie (18, 19a, 19b) est capturée à l'aide d'une unité de capture (26),
des données d'image correspondant à l'image imprimée capturée sont produites,
les données d'image sont archivées dans une archive (32),
au moins une partie des données d'impression utilisées pour produire l'image imprimée sont mémorisées dans l'archive (32) conjointement avec les données d'image,
en plus des donnée d'image et des données d'impression, des données de production du processus d'impression sont collectées et archivées afin de permettre une réimpression la plus conforme à l'original possible du document servant de base à l'image imprimée,
les données d'image archivées dans l'archive sont extraites de l'archive (32) à l'aide d'au moins une information d'indexation et éditées, et
à l'aide des données d'impression mémorisées dans l'archive (32) et des données d'image mémorisées dans l'archive (32), on vérifie si l'image imprimée effectivement imprimée concorde avec les données d'impression destinées à produire l'image imprimée.

2. Procédé selon l'une quelconque des revendications précédentes, **caractérisé en ce que** les informations concernant les paramètres de production destinés à fabriquer l'image imprimée, à traiter préalablement et/ou ultérieurement un matériau de support à imprimer et/ou imprimé, les paramètres de traitement d'image d'un processeur d'image tramée, les paramètres électrographiques préréglés du système d'impression ou de copie (18, 19a, 19b) et/ou d'autres paramètres destinés à produire et/ou à traiter le matériau de support à imprimer et/ou imprimé sont mémorisés dans l'archive (32) conjointement avec les données d'image collectées.

3. Procédé selon l'une quelconque des revendications précédentes, **caractérisé en ce que** l'image imprimée capturée à l'aide de l'unité de capture (26) présente au moins une zone d'une face d'impression, une face d'impression, des zones de plusieurs faces d'impression, la face d'impression présentant de préférence la dimension d'un format papier standard.

4. Procédé selon l'une quelconque des revendications précédentes, **caractérisé en ce qu'**un matériau de support (20, 43) sur lequel l'image imprimée est produite à l'aide du système d'impression ou de copie (18, 19a, 19b) est soumis à l'effet d'un traitement ultérieur à l'aide d'au moins une unité de traitement ultérieur (36, 38), et
**en ce que** l'unité de capture (26) capture l'image imprimée après le traitement ultérieur du matériau de support (20, 43) à l'aide de la ou des unités de traitement ultérieur (36, 38), le matériau de support (20, 43) étant de préférence un matériau de support en forme de bande (20), en particulier une bande de papier (20).

5. Procédé selon l'une quelconque des revendications précédentes, **caractérisé en ce que** le procédé est inséré dans un processus de production destiné à produire des imprimés (40),
une chaîne de production destinée à mettre en oeuvre le processus de production comprenant, en plus du système d'impression ou de copie (18, 19a, 19b) destiné à produire l'image imprimée sur un matériau de support (20, 43), un dévidoir, des moyens de traitement préalable, des moyens de traitement ultérieur, tels que des enrouleurs, des agrafeuses, des unités de pliage et/ou des unités de découpage.

6. Procédé selon l'une quelconque des revendications précédentes, **caractérisé en ce que** l'unité de capture (26) est une unité de capture optique et comprend de préférence au moins une caméra (28) ou un dispositif de balayage doté d'un dispositif à transfert de charge.

7. Procédé selon l'une quelconque des revendications précédentes, **caractérisé en ce que** l'unité de capture (26) comprend un ensemble d'éclairage destiné à éclairer l'image imprimée à capturer, de préférence une source de lumière stroboscopique.

8. Procédé selon l'une quelconque des revendications précédentes, **caractérisé en ce qu'**au moins deux unités de capture (26) présentent des zones de capture disposées les unes derrière les autres dans la direction de transport du matériau de support (20, 43), de sorte que les parties de l'image imprimée disposée dans les zones de capture des unités de capture ou des images imprimées disposées dans les zones de capture des unités de capture puissent être capturées simultanément, les zones de capture voisines étant de préférence adjacentes les unes aux autres.

9. Procédé selon l'une quelconque des revendications précédentes, **caractérisé en ce qu'**une image imprimée composée d'au moins deux couleurs primaires est produite à l'aide du système d'impression ou de copie (18, 19a, 19b), l'image imprimée étant capturée de préférence en tant qu'image en niveaux de gris ou en tant qu'image en noir et blanc à l'aide de l'unité de capture.

10. Procédé selon l'une quelconque des revendications précédentes, **caractérisé en ce qu'**au moins une partie du matériau de support (20, 43) est imprimée recto verso, les images imprimées produites sur la face avant et sur la face arrière du matériau de support (20, 43) étant capturées à l'aide de l'unité de capture (26).

11. Dispositif d'archivage d'images imprimées,
comprenant une unité de capture (26) destinée à capturer une image imprimée et à produire des données d'image correspondant à l'image imprimée capturée, et
comprenant une archive (32) destinée à mémoriser au moins une partie des données d'impression utilisées pour produire l'image imprimée conjointement avec les données d'image, et
comprenant des moyens destinés à mémoriser les données d'impression conjointement avec les données d'image dans l'archive, et
comprenant des moyens destinées à capturer et à archiver des données de produit du processus d'impression en plus des données d'image et des données d'impression, afin de permettre une réimpression la plus conforme à l'original possible du document servant de base à l'image imprimée,
comprenant des moyens extrayant et éditant les données d'image archivées dans l'archive (32) à l'aide d'au moins une information d'indexation, et
comprenant des moyens vérifiant à l'aide des données d'impression mémorisées dans l'archive (32) et des données d'image mémorisées dans l'archive si l'image effectivement imprimée concorde avec les données d'impression destinées à produire l'image imprimée.

12. Dispositif selon la revendication 11, **caractérisé en ce que** l'image imprimée est produite à l'aide d'un système d'impression ou d'un système de copie (18, 19a, 20a) inséré de préférence dans une chaîne de production destinée à produire des imprimés (40).
